# EUROPEAN PATENT SPECIFICATION

(11) **EP 0 271 087 B1**
(45) Date of publication and mention of the grant of the patent: **03.11.1993**
(21) Application number: 87118266.3
(22) Date of filing: 09.12.1987
(51) Int. Cl.: G01N 21/47, G01N 11/00

(54) **Method of measuring the viscosity of an optical fibre preform**
Verfahren zur Messung der Viskosität des Vorformlings einer optischen Faser
Procédé de mesure de la viscosité d'une préforme d'une fibre optique

(30) Priority: 10.12.1986 IT 6792086
(43) Date of publication of application: 15.06.1988
(73) Proprietor: CSELT Centro Studi e Laboratori Telecomunicazioni S.p.A., I-10148 Turin (IT)
(72) Inventor: Grego, Giorgio, Venaria Reale Torino (IT)
(74) Representative: Riederer Freiherr von Paar zu Schönau, Anton

(56) References cited:
- EP-A- 0 190 001
- GB-A- 2 140 554
- US-A- 4 571 081
- CHEMICAL ABSTRACTS vol. 96, no. 6, 8 February 1982, page 28, column 1, abstract no. 36077b, Columbus, Ohio, USA; J.A. MARQUSEE et al.: "Brillouin light scattering from polymer gels" & J. Chem. Phys. 1981, vol. 75, no. 11, pages 5239-5245
- JOURNAL OF LIGHTWAVE TECHNOLOGY vol. LT-3,no. 3, June 1985, pages 574-578; H. Tokiwa et al.: "Scattering Characteristics in Reheated Fluorozirconate Glasses"
- PROCEEDINGS OF THE I.E.E.E. vol. 70, no. 6, June 1982, pages 626-634, New York, USA; L.S. WATKINS: "Control of Fiber Manufacturing Processes"
- ELECTRONICS LETTERS vol. 18, no. 24, 25 November 1982, pages 1044-1046, London, GB; H. POIGNANT et al.: "Viscosity and optical measurement on fluoride glasses"

## Description

The present invention concerns a method of measuring the viscosity of an optical fibre preform, which method serves for on-line monitoring of the characteristics thereof. The invention adapts principles known per se in physics ("Brillouin light scattering from polymer gels" by Marqusee and Deutch in J. Chem. Phys. 1981, 75(11), pages 5239-5245) to the technique of optical fibre drawing.

When drawing optical fibre preforms which comprise layers with non-uniform composition (for instance because of different dopant concentrations), it is important to monitor viscosity throughout a whole preform cross-section in the softening region of the preform since deviations from a desired viscosity profile could alter the characteristics of the final material. In particular, an on-line, point-by-point monitoring of the material viscosity would be desirable.

The literature does not disclose techniques for on-line monitoring of the viscosity of a body which is in fluid condition or whose behaviour can be assimilated with that of a fluid (e.g. a glass). Viscosity information could be obtained for instance from temperature values, measured by means of pyrometers. Yet temperature information supplied by a pyrometer cannot be used to obtain viscosity when the latter is to be determined near the softening temperature. In effect, considering for instance a vitreous body like an optical fibre preform, viscosity variations of the order of 10⁶ occur within an interval of few degrees centigrade. The precise determination of viscosity would require measurement of temperature variations of the order of 1°C in a body which is for instance at a temperature of about 2000°C, and industrial pyrometers do not have such a sensitivity.

The invention aims to provide a method allowing direct measurement of the viscosity of an optical fibre preform with a very high measurement precision.

The invention is based upon the consideration that, when an electromagnetic radiation (e.g. a light beam) is sent into a body such as a gel or also a glass (i.e. a fluid body), the scattered radiation exhibits frequency alterations depending, i. a., on body viscosity, as has been explained in the above mentioned literature by Marqusee and Deutch.

Among scattering phenomena, Brillouin scattering is of particular interest for the present invention: this scattering gives rises to two spectral lines, at both sides of the spectral line of the incident radiation, with a width: 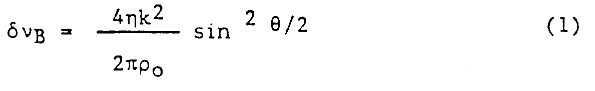
where:
- η =: viscosity of the body;
- k =: 2πn/λ = wave vector of the incident radiation (n = refractive index of the body, λ = wavelength of the radiation);
- ρₒ =: density of the body;
- ϑ =: angle of observation.

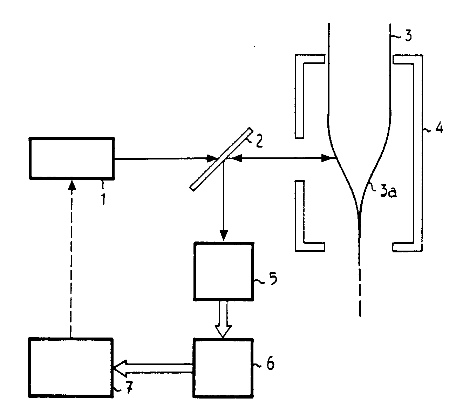

Therefore, according to the present invention, the method of measuring the viscosity of a body is adapted, wherein: at least a first beam of substantially monochromatic light is sent into the body under test; a beam scattered by the body is collected according to a predetermined observation angle; the width of at least one line generated in the radiation spectrum due to the Brillouin scattering is measured; and the viscosity of the body region traversed by the beam is obtained from the measured linewidth; the invention being characterized in that said body is an optical fibre preform comprising a plurality of coaxial layers, which is submitted to the thermal treatments required for the drawing of an optical fibre, and in that said beam is first sent into the preform so as to pass through a first, substantially homogeneous preform layer and the viscosity of said layer is obtained, and then the measure is repeated by varying the beam position so that the beam passes also through a different, substantially homogeneous layer at each subsequent measurement, and the viscosity of each new layer is obtained from the difference with respect to the preceding measurement.

For instance, the first measurement will be carried out on the outer preform layer and then the beam will be displaced step by step parallel to itself so as to pass through a different layer at each subsequent step, the displacement extent being such that the beam scans the whole area of a plane preform section.

Information could also be simultaneously obtained in a plurality of sections taken in different planes, in particular in two perpendicular planes. To this end two or more beams are to be used, each beam being displaceable parallel to itself in one said plane. For instance, a measurement in axial direction and a measurement on a whole section perpendicular to the preform axis can be effected.

Preferably, the measurements are carried out on the backscattered beam (ϑ=180°) as this makes value δν_{B} maximum, as clearly shown by relation (1), thereby facilitating the measurement.

The method as described has a very high measurement precision. In fact, as known, width δν_{B} is of the order of 10 MHz and the commercially available apparatus for spectrometric measurements allow such a value to be measured with a precision that, depending on the greater or lesser apparatus sophistication, ranges from about 1 KHz to 1 Hz or a fraction of a Hz. Thus, viscosity variations ranging from 10⁻⁴ to 10⁻⁷, or even smaller, can be determined.

It is also to be appreciated that the scattered radiation spectrum, besides the lines due to Brillouin scattering, exhibits a further line, centered on the incident radiation frequency and having a width: 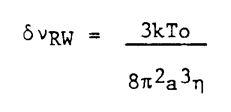
where k, η have the same meaning as in (1), and To and a are the temperature in °K and the radius of the particles forming the body, respectively.

Thus, according to the invention, besides δν_{B}, also δν_{RW} could be measured to determine also the preform temperature. A further control parameter for the monitored process is thus available.

The method disclosed can be carried out by means of the conventional apparatus for Brillouin spectrometry.

To better illustrate said method, the accompanying drawing schematically shows one such apparatus employed for effecting measures on an optical fibre preform.

In the drawing, the beam outgoing from a source 1, e.g. a monomode laser, is sent through a beam splitter 2 onto an optical fibre preform 3 located in a drawing furnace 4. The beam is so oriented as to impinge for instance at the softening region 3a. The backscattered beam is reflected by beam splitter 2 towards a Fabry-Perot interferometer 5, whose output signal is fed to a spectrum analyzer 6 sending the values of δν_{B} to a computer 7 which computes the value of η according to relation (1).

Source 1 is mounted on a support (not shown) allowing the source to be displaced parallel to itself to obtain the viscosity over a whole plane cross-section of preform 3.

A second apparatus like that described above could be arranged to send a light beam parallel to the axis of preform 3, so as to supply viscosity information relevant to axial direction.

A second measurement by the same apparatus may provide the width δν_{RW} of the Rayleigh scattering line; by supplying computer 7 with such a value, also the body temperature can be obtained.

## Claims

1. Method of measuring the viscosity of a body (3), wherein at least a first beam of substantially monochromatic light is sent into the body under test; a beam scattered by the body is collected according to a predetermined observation angle; the width of at least one line generated in the radiation spectrum due to the Brillouin scattering is measured; and the viscosity of the body region (3a) traversed by the beam is obtained from the measured linewidth, characterized in that said body is an optical fibre preform (3) comprising a plurality of coaxial layers, which is being submitted to the thermal treatments required for the drawing of an optical fibre, and in that said beam is first sent into the preform so as to pass through a first, substantially homogeneous preform layer and the viscosity of said layer is obtained, and then the measure is repeated by varying the beam position so that the beam passes also through a different, substantially homogeneous layer at each subsequent measurement, and the viscosity of each new layer is obtained from the difference with respect to the preceding measurement.

2. Method according to claim 1, characterized in that said angle is 180°.

3. Method according to claim 1 or 2, characterized in that the measurement is carried out by displacing the beam parallel to itself, the displacement extent being such that the beam scans the whole area of a plane preform section.

4. Method according to claim 3, characterized in that said plane section is perpendicular to the preform (3) axis.

5. Method according to claims 3 or 4, characterized in that said plane section is a section taken in the softening region of the preform (3).

6. Method according to any preceding claim, characterized in that at least a second monochromatic beam is sent into the preform along a second direction different from the first one, and the viscosity of the preform (3) at least in said second direction is also measured.

7. Method according to claim 6, characterized in that the viscosity is determined also over a whole plane section comprising said second direction by changing the second beam position.

8. Method according to any preceding claim, characterized in that the second beam is sent into the preform (3) parallel to the preform axis.

9. Method according to any preceding claim, characterized in that the width of a line due to Rayleigh scattering is measured in the or each scattered beam, to determine the temperature in the region traversed by the beam.

## Patentansprüche

1. Verfahren zum Messen der Viskosität eines Körpers (3), bei dem man wenigstens ein erstes Strahlenbündel von im wesentlichen monochromatischem Licht in den zu testenden Körper sendet; ein von dem Körper gestreutes Strahlenbündel entsprechend einem gegebenen Beobachtungswinkel sammelt; die Breite wenigstens einer Linie, die im Strahlungsspektrum aufgrund der Brillouin-Streuung erzeugt wird, mißt; und aus der gemessenen Linienbreite die Viskosität des vom Strahlenbündel durchlaufenen Körperbereichs (3a) ermittelt, dadurch gekennzeichnet, daß dieser Körper eine Vorform (3) einer optischen Faser, mit einer Vielzahl von koaxialen Schichten ist, die den für das Ziehen einer optischen Faser notwendigen thermischen Behandlungen unterworfen wird, und daß man dieses Strahlenbündel zuerst so in die Vorform sendet, daß eine erste im wesentlichen homogene Vorformschicht durchlaufen wird und die Viskosität dieser Schicht erhalten wird, und man dann die Messung wiederholt, indem man die Strahlenbündelposition so ändert, daß das Strahlenbündel bei jeder nachfolgenden Messung durch eine andere im wesentlichen homogene Schicht hindurchverläuft, und man die Viskosität jeder neuen Schicht aus der Differenz zur vorhergehenden Messung erhält.

2. Verfahren nach Anspruch 1, dadurch gekennzeichnet, daß der Winkel 180° beträgt.

3. Verfahren nach Anspruch 1 oder 2, dadurch gekennzeichnet, daß man die Messung so ausführt, daß man das Strahlenbündel parallel zu sich selbst um ein solches Stück versetzt, daß das Strahlenbündel die gesamte Fläche eines ebenen Vorformschnitts abtastet.

4. Verfahren nach Anspruch 3, dadurch gekennzeichnet, daß der ebene Schnitt rechtwinklig zur Achse der Vorform (3) verläuft.

5. Verfahren nach Anspruch 3 oder 4, dadurch gekennzeichnet, daß daß der ebene Schnitt ein im Erweichungsbereich der Vorform (3) gelegter Schnitt ist.

6. Verfahren nach einem der vorhergehenden Ansprüche, dadurch gekennzeichnet, daß man wenigstens ein zweites monochromatisches Strahlenbündel entlang einer zweiten, von der ersten Richtung abweichenden Richtung in die Vorform sendet und auch die Viskosität der Vorform (3) mindestens in dieser zweiten Richtung mißt.

7. Verfahren nach Anspruch 6, dadurch gekennzeichnet, daß man die Viskosität auch über einen gesamten die zweite Richtung enthaltenden ebenen Schnitt mißt, indem man die Position des zweiten Strahlenbündels ändert.

8. Verfahren nach einem der vorhergehenden Ansprüche, dadurch gekennzeichnet, daß man das zweite Strahlenbündel parallel zur Vorformachse in die Vorform (3) sendet.

9. Verfahren nach einem der vorhergehenden Ansprüche, dadurch gekennzeichnet, daß man zur Bestimmung der Temperatur in dem vom Strahlenbündel durchsetzten Bereich die Breite einer Linie aufgrund der Rayleigh-Streuung im oder in jedem gestreuten Strahlenbündel mißt.

## Revendications

1. Procédé de mesure de la viscosité d'un corps (3), dans lequel on envoie au moins un premier faisceau de lumière substantiellement monochromatique dans le corps à tester; on recueille selon un angle d' observation prédéterminé un faisceau diffusé par le corps; on mesure la largeur d'au moins une raie engendrée dans le spectre du rayonnement par effet de la diffusion de Brillouin; et on obtient de la largeur mesurée de la raie la viscosité de la zone (3a) du corps traversée par le faisceau, caractérisé en ce que ce corps est une préforme de fibre optique (3) comprenant une pluralité de couches coaxiales, qui est soumise aux traitements thermiques requis pour l'étirage d'une fibre optique, et en ce que on envoie d'abord le faisceau dans la préforme de manière qu'il passe par une première couche, substantiellement homogène, de la préforme et on obtient la viscosité de cette couche, et après on répète la mesure en changeant la position du faisceau de manière qu'il passe également à travers une couche différente, substantiellement homogène, à chaque mesure successive, et on obtient la viscosité de chaque nouvelle couche à partir de la différence par rapport à la mesure précédente.

2. Procédé selon la revendication 1, caractérisé en ce que l'angle est de 180°.

3. Procédé selon la revendication 1 ou 2, caractérisé en ce que la mesure est effectuée en déplaçant le faisceau parallèlement à lui-même, l'entité du déplacement étant telle que le faisceau balaie toute l'aire d'une section plane de la préforme.

4. Procédé selon la revendication 3, caractérisé en ce que la section plane est perpendiculaire à l'axe de la préforme (3).

5. Procédé selon la revendication 3 ou 4, caractérisé en ce que la section plane est une section prise dans la zone de ramollissement de la préforme (3).

6. Procédé selon l'une quelconque des revendications qui précèdent, caractérisé en ce qu'on envoie dans la préforme au moins un second faisceau monochromatique selon une seconde direction différente de la première, et on mesure la viscosité de la préforme (3) au moins dans cette seconde direction.

7. Procédé selon la revendication 6, caractérisé en ce qu'on mesure la viscosité aussi sur toute une section plane qui comprend cette seconde direction, en changeant la position du second faisceau.

8. Procédé selon l'une quelconque des revendications qui précèdent, caractérisé en ce qu'on envoie le second faisceau dans la préforme (3) parallèlement à l'axe de la préforme.

9. Procédé selon l'une quelconque des revendications qui précèdent, caractérisé en ce qu'on mesure, dans le faisceau ou dans chaque faisceau diffusé, la largeur d'une raie due à la diffusion de Rayleigh, pour déterminer la température dans la zone traversée par le faisceau.
